# EUROPEAN PATENT APPLICATION

(11) **EP 4 682 128 A1**
(43) Date of publication of application: **21.01.2026**
(21) Application number: 24770881.1
(22) Date of filing: 12.03.2024
(51) Int. Cl.: C04B 18/167, B28B 11/24, C04B 22/10, C04B 40/02

(54) **CEMENT RECYCLED MATERIAL MANUFACTURING METHOD**

(30) Priority: 14.03.2023 JP 2023039988
(71) Applicant: Idemitsu Kosan Co.,Ltd., Tokyo 100-8321 (JP)
(72) Inventor: TERAMAE Tsuyoshi, Tokyo 100-8321 (JP); KUMITA Shoji, Tokyo 100-8321 (JP); HAYAKAWA Yasuyuki, Tokyo 108-8560 (JP); YAGI Toshiyuki, Tokyo 108-8560 (JP); YOSHIDA Hiroyuki, Tokyo 108-8560 (JP); SASAKI Takeshi, Tokyo 108-8560 (JP)
(74) Representative: Hoffmann Eitle
(86) International application number: PCT/JP2024/009558
(87) International publication number: WO 2024/190776

(57) **Abstract**

A method for manufacturing a recycled material from cement includes: mixing a cement-containing waste with water to form a first slurry; stirring the first slurry for a stirring time of 2 hours or more; supplying exhaust gas containing carbon dioxide into the first slurry while stirring the first slurry to fix the carbon dioxide contained in the exhaust gas as the calcium carbonate; and forming a second slurry in the fixing step, the second slurry containing the calcium carbonate.

## Description

### TECHNICAL FIELD

The present invention relates to a method for manufacturing a recycled material from cement.

### BACKGROUND ART

Cement-containing waste, which is currently solidified and disposed of as waste, contains a large amount of calcium. There have been attempts to utilize this calcium as a source of counter cations for carbonation.

For instance, Patent Literature 1 discloses a method for utilizing cement-containing waste, including: a carbon fixing step and a material recycling step. In the carbon fixing step, waste containing cement is immersed in water to form a waste slurry, and exhaust gas containing carbon dioxide discharged from cement manufacturing equipment is supplied into the waste slurry, thereby causing a reaction between calcium components dissolved into the waste slurry and the carbon dioxide in the exhaust gas, leading to fixing the carbon dioxide as calcium carbonate. In the material recycling step, a solid content is separated from the waste slurry, which has been treated in the carbon fixing step, and used as a cement material.

Moreover, Patent Literature 2 discloses a method for manufacturing a cement mixture material, including a slurrying step in which fresh concrete sludge or waste concrete fine powder is heated and then mixed with water to form a slurry, and a carbonation step in which carbon dioxide gas is passed through the slurry to carbonate the slurry.

### CITATION LIST

### PATENT LITERATURE(S)

Patent Literature 1: JP 2014-117636 A
Patent Literature 2: JP 2021-138574 A

### SUMMARY OF THE INVENTION

### PROBLEM(S) TO BE SOLVED BY THE INVENTION

However, neither Patent Literature 1 nor Patent Literature 2 discloses data on an amount of calcium carbonate formed by carbonation with carbon dioxide (i.e., an amount of carbon dioxide fixed), and sufficient consideration has not been given to increasing the amount of calcium carbonate.

In the method described in Patent Literature 2, the slurry before carbon dioxide gas is passed therethrough is subjected to a heat treatment, for instance, in a range from 100 degrees C to 300 degrees C. This heat treatment results in emission of carbon dioxide gas, which causes a decrease in a net amount of carbon dioxide fixed (a value obtained by subtracting the amount of carbon dioxide emitted by the fixing treatment from the amount of carbon dioxide supplied).

An object of the invention is to provide a method for manufacturing a recycled material from cement, the method being capable of increasing a content ratio of calcium carbonate.

### MEANS FOR SOLVING THE PROBLEM(S)

[1] A method for manufacturing a recycled material from cement includes: forming a first slurry mixing cement-containing waste with water; stirring the first slurry for a stirring time of 2 hours or more; supplying exhaust gas containing carbon dioxide into the first slurry while stirring the first slurry to fix the carbon dioxide contained in the exhaust gas as calcium carbonate; and forming a second slurry in the fixing of the carbon dioxide, the second slurry containing the calcium carbonate.
[2] The method for manufacturing a recycled material from cement according to [1] further includes: separating the second slurry into a solid content containing the calcium carbonate and a liquid.
[3] The method for manufacturing a recycled material from cement according to [2] further includes: drying the separated solid content.
[4] In the method for manufacturing a recycled material from cement according to any one of [1] to [3], the stirring time of the first slurry is 5 hours or more.
[5] In the method for manufacturing a recycled material from cement according to any one of [1] to [4], in the fixing of the carbon dioxide, a feed rate of the exhaust gas into the first slurry is 1 L/min or more per 1 kg of a solid content, on an absolute dry basis, in the cement-containing waste, and a feed time of the exhaust gas into the first slurry is 2 hours or more.
[6] In the method for manufacturing a recycled material from cement according to any one of [1] to [5], in the fixing of the carbon dioxide, the exhaust gas is supplied into the first slurry by bubbling.
[7] In the method for manufacturing a recycled material from cement according to any one of [1] to [6], in the forming of the first slurry, a mass ratio of a solid content, on an absolute dry basis, in the cement-containing waste to the water, expressed as the solid content on the absolute dry basis in the cement-containing waste/the water, is in a range from 0.01 to 0.43.
[8] In the method for manufacturing a recycled material from cement according to any one of [1] to [7], the exhaust gas is combustion exhaust gas.
[9] In the method for manufacturing a recycled material from cement according to any one of [1] to [8], the recycled material from cement is used for any one of applications including concrete products, road materials, embankment materials, blocks, mine drainage neutralizers, disinfectants for livestock industry, fillers for additives to plastics, fillers for additives to rubber, and fillers for additives to paints.

The above aspect of the invention makes it possible to provide a method for manufacturing a recycled material from cement, the method enabling an increase in the content ratio of calcium carbonate.

### BRIEF DESCRIPTION OF DRAWINGS

Fig. 1 is a graph illustrating a relationship between a stirring time and a ratio of CaCO₃ in each of formed substances.
Fig. 2 is a graph illustrating a relationship between a stirring time and a ratio of CaCO₃ in each of formed substances.
Fig. 3 is a graph illustrating a relationship between a CO₂ feed time and a ratio of CaCO₃ in each of formed substances.
Fig. 4 is a graph illustrating a relationship between a stirring time and a ratio of CaCO₃ in each of formed substances.

### DESCRIPTION OF EMBODIMENT(S)

Herein, numerical ranges represented using "to" represent a range whose lower limit is a value recited before "to" and whose upper limit is a value recited after "to."

Herein, a value of a mass percent concentration (unit: mass%) is the same as a value of a weight percent concentration (unit: weight% (wt%)).

### First Exemplary Embodiment

A method for manufacturing a recycled material from cement according to a first exemplary embodiment (hereinafter, also referred to as a manufacturing method of the first exemplary embodiment) includes: forming a first slurry by mixing a cement-containing waste with water (hereinafter, also referred to as a first slurry formation step); stirring the first slurry for a stirring time of 2 hours or more (hereinafter, also referred to as a stirring step); supplying exhaust gas containing carbon dioxide into the first slurry while stirring the first slurry to fix the carbon dioxide contained in the exhaust gas as calcium carbonate (hereinafter, also referred to as a fixing step); and forming a second slurry in the fixing step, the second slurry containing the calcium carbonate.

In the fixing step of the exemplary embodiment, a mechanism for fixing carbon dioxide contained in exhaust gas as calcium carbonate will be described.

Carbon dioxide in exhaust gas comes into contact with water in the first slurry to dissolve and ionize. The ionized carbon dioxide is bonded to calcium ions eluted from the cement-containing waste to form calcium carbonate (CaO + CO₂ → CaCO₃).

This formation of calcium carbonate decreases the number of calcium ions in the water to decrease pH of the slurry. Meanwhile, calcium hydroxide formed by the hydration reaction of cement with water dissolves in water within a solubility range of calcium hydroxide in water. In other words, calcium is eluted from the cement-containing waste to make up for the calcium ions lost in the water due to the formation of calcium carbonate, with the solubility of calcium hydroxide being the upper limit.

Therefore, in theory, calcium carbonate is continuously formed by continuously supplying carbon dioxide into the first slurry. The pH of the slurry is considered to be determined mainly by a "calcium ion concentration in water determined by a dissolution rate of calcium hydroxide" and "contact efficiency between carbon dioxide and calcium ions, using parameters such as a feed rate of carbon dioxide and a bubble diameter."

The inventors have found that in a carbon dioxide fixation technology, the second slurry having a larger content ratio of calcium carbonate is obtainable by mixing cement-containing waste with water to form the first slurry, then stirring the first slurry for 2 hours or more, and then supplying exhaust gas into the first slurry, compared with a case where the first slurry is not stirred or a case where the first slurry is stirred for less than 2 hours (e.g., one hour). It has been confirmed that a solid content separated from the second slurry and a substance obtained by drying the solid content (solid content after drying) contain a large amount of calcium carbonate. At least one of the second slurry, the solid content separated from the second slurry, or the substance obtained by drying the solid content (solid content after drying) can be suitably used as a recycled material from cement.

In the manufacturing method of the exemplary embodiment, the significance of including the stirring step and the significance of the stirring time being 2 hours or more will be described.

Calcium hydroxide formed in the stirring step serves to supply calcium ions in the fixing step. In order to increase the amount of calcium carbonate formed, it is necessary to increase the amount of calcium hydroxide formed. For this purpose, the stirring step in which the first slurry is stirred for at least a certain time is required.

The inventors have found that the amount of calcium carbonate formed increases when the stirring time of the first slurry is set to 2 hours or more. It is presumed that the reaction of forming calcium hydroxide proceeds sufficiently with the stirring time of 2 hours or more.

On the other hand, it is presumed that when the stirring time is less than 2 hours, since the amount of calcium hydroxide formed decreases, the reaction of forming calcium hydroxide does not proceed sufficiently.

Therefore, according to the manufacturing method of the exemplary embodiment, setting the stirring time to 2 hours or more makes it possible to obtain a recycled material from cement with an increased content ratio of calcium carbonate.

The manufacturing method of the exemplary embodiment contributes to reducing carbon dioxide emissions, and enables cement-containing waste, which has been previously treated at high cost, to be recycled as a recycled material from cement. This recycled material from cement is usable for concrete products, road materials, civil engineering and construction materials (e.g., embankment materials), and the like.

### Cement-containing Waste

Examples of the cement-containing waste used in the manufacturing method of the exemplary embodiment include concrete sludge, residual concrete, returned concrete, coal ash, carbide slag and the like discharged during a process of manufacturing concrete products. However, the cement-containing waste is not limited to the examples as long as the cement-containing waste is a substance from which calcium can be dissolved into water.

It is preferable that the calcium contained in the solid content (on an absolutely dry basis) of the cement-containing waste is 10 wt% or more in terms of CaO. The absolutely dry basis refers to a mass of the solid content without water.

The cement-containing waste usually contains aggregate. However, even if the cement-containing waste contains aggregate, calcium carbonate is formed by supplying carbon dioxide to the first slurry. The more the amount of the aggregate, the lower the calcium content in the cement-containing waste, and therefore the amount of calcium carbonate formed by fixing carbon dioxide is decreased.

Therefore, the cement-containing waste used in the manufacturing method of the exemplary embodiment is preferably one from which aggregate has been removed as much as possible. Examples of a method for removing aggregate include a specific gravity separation method.

Steps of the manufacturing method in the exemplary embodiment will be described.

### First Slurry Formation Step

The first slurry formation step is a step for forming the first slurry by mixing the cement-containing waste with water. A method for mixing the cement-containing waste with water is not particularly limited.

A water content of the first slurry obtained is determined by taking into consideration both the amount of water (water content) contained in the cement-containing waste itself and the amount of water to be mixed with the cement-containing waste.

For instance, in a case of concrete sludge discharged during a concrete manufacturing process, a solid content (on the absolute dry basis) contained in the concrete sludge is usually 5 mass% or more. In a case of residual concrete and returned concrete, residual concrete and returned concrete are often squeezed using a filter press and discharged when a solid content (on the absolute dry basis) reaches about 50 mass%.

As described above, the amount of water (water content) when discharged depends on the cement-containing waste, and even in the case of the same "concrete sludge," the amount of water varies slightly from day to day.

Therefore, herein, the water content of the first slurry is calculated as follows.

For instance, when 50 parts by mass of water is mixed with 100 parts by mass of cement-containing waste having a water content (water content) of 40 mass%, the water content (water content) of the first slurry is calculated to be 60 mass% ({(40 + 50) / (100 + 50)} × 100 = 60).

The first slurry formation step is preferably a step of mixing the cement-containing waste with water so that the water content of the first slurry is in a range from 70 mass% to 99 mass%. The water content of the first slurry is more preferably in a range from 75 mass% to 98 mass%, still more preferably in a range from 80 mass% to 95 mass%.

In the first slurry, a ratio of the solid content (on the absolute dry basis) in the cement-containing waste to the water (solid content (on the absolute dry basis) in the cement-containing waste/the water) is, in mass ratio, preferably in a range from 0.01 to 0.43, more preferably in a range from 0.02 to 0.33, and still more preferably in a range from 0.05 to 0.25.

Regarding the ratio (the solid content (on the absolute dry basis) in the cement-containing waste/the water), the amount of water is a sum of the amount of water contained in the cement-containing waste itself and the amount of water to be mixed with the cement-containing waste.

### Stirring Step

The stirring step is a step in which the first slurry is stirred for a stirring time of 2 hours or more.

In the stirring step, the stirring time of the first slurry is preferably 2.5 hours or more, more preferably 3 hours or more, still more preferably 4 hours or more, still further more preferably 5 hours or more, yet still further more preferably 6 hours or more, even still further more preferably 8 hours or more, and even still further more preferably 12 hours or more.

The upper limit value of the stirring time of the first slurry is preferably 36 hours or less, more preferably 24 hours or less, from the viewpoint of sufficiently suppressing solidification of cement.

A stirring means used in the stirring step (hereinafter also referred to as a first stirring means) is not particularly limited, and examples thereof include mechanical stirring using a stirring blade.

In the stirring step, the first slurry is preferably stirred so that the solid content in the cement-containing waste does not precipitate. In the stirring step, the first slurry is preferably stirred so that at least a portion of the solid content in the cement-containing waste can be maintained in a suspended and dispersed state.

In a stirring tank used in the stirring step, it is necessary to obtain a flow of the first slurry such that the solid content in the first slurry does not precipitate and the solid content is unlikely to adhere on a wall surface of the stirring tank.

A rotation speed of the first stirring means depends on a size and shape of the stirring tank and a size and shape of the stirring blade, but is, for instance, in a range from 10 rpm to 500 rpm, preferably in a range from 15 rpm to 250 rpm. When the rotation speed of the first stirring means is in a range from 15 rpm to 250 rpm, the flow of the first slurry is more easily obtained.

In the stirring step, the first slurry is preferably stirred at room temperature from the viewpoint of suppressing release of carbon dioxide during apparatus operation. The room temperature is a temperature at which no particular heating or cooling is performed, specifically, in a range from 5 degrees C to 35 degrees C. A temperature of the first slurry during stirring is in a range from 5 degrees C to 35 degrees C, preferably in a range from 10 degrees C to 35 degrees C. The temperature of the first slurry during stirring may be less than 5 degrees C as long as stirring prevents the first slurry from freezing.

In the stirring step, the first slurry is preferably not heated.

### Fixing Step

The fixing step is a step of supplying exhaust gas containing carbon dioxide into the first slurry while stirring the first slurry, thereby fixing the carbon dioxide contained in the exhaust gas as calcium carbonate.

The stirring of the first slurry in the fixing step is performed while supplying exhaust gas containing carbon dioxide after stirring for 2 hours or more in the stirring step.

In the manufacturing method of the exemplary embodiment, the fixing step is carried out while stirring the first slurry, which makes it possible to efficiently form calcium hydroxide in the first slurry.

Stirring of the first slurry in the fixing step is preferably performed at room temperature. The temperature of the first slurry during stirring may be less than 5 degrees C as long as stirring prevents the first slurry from freezing.

In the fixing step, the first slurry is preferably stirred without being heated.

In the stirring tank used in the fixing step, it is required to stir the first slurry so as to efficiently bring exhaust gas into contact with calcium dissolved in the first slurry.

A stirring means used in the fixing step (hereinafter also referred to as a second stirring means) may be the same as or similar to the first stirring means. The second stirring means and the first stirring means may be the same as or different from each other.

A rotation speed of the second stirring means depends on a size and shape of the stirring tank and a size and shape of the stirring blade, but is, for instance, in a range from 10 rpm to 500 rpm, preferably in a range from 15 rpm to 450 rpm. When the rotation speed of the second stirring means is in a range from 15 rpm to 450 rpm, exhaust gas can be more efficiently brought into contact with calcium dissolved in the first slurry.

In the fixing step of the exemplary embodiment, if the feed of exhaust gas into the first slurry is continued, the pH will eventually reach a constant value, and it is presumed that this value is related to the balance between the "rate of calcium dissolution (contributing to increasing the pH)" and the "rate of calcium carbonate formation (contributing to decreasing the pH) which is determined by the contact efficiency between carbon dioxide and calcium ions."

After the pH of the first slurry becomes constant, the feed of the exhaust gas is stopped, which causes the pH to gradually increase. This is considered to be due to either the redissolution of calcium carbonate or the continued dissolution of calcium from the cement-containing waste.

The inventors have found that by continuing to supply exhaust gas even after the pH of the first slurry becomes constant or drops to a neutral range (specifically, pH 9 or less), the amount of calcium carbonate formed gradually increases, and as a result, the content ratio of calcium carbonate in the second slurry is increasable.

In the fixing step of the exemplary embodiment, preferred ranges respectively for the feed rate, the feed time and the like of the exhaust gas into the first slurry are as follows.

The feed rate of the exhaust gas into the first slurry is 1 L/min or more, preferably 1.5 L/min or more, per 1 kg of the solid content (on an absolute dry basis) in the cement-containing waste in the first slurry, from the viewpoint of reacting calcium with carbon dioxide in the first slurry efficiently in a short time. The upper limit of the feed rate of the exhaust gas into the first slurry varies depending on specifications of an apparatus, but is, for instance, 10 L/min or less.

From the viewpoint of further increasing the content ratio of calcium carbonate, the longer the feed time of exhaust gas into the first slurry, the better. The feed time is preferably 50 minutes or more, more preferably 2 hours or more, still more preferably 3 hours or more, still further more preferably 4 hours or more, and yet still further more preferably 5 hours or more. From the viewpoint of production efficiency, the upper limit of the feed time of the exhaust gas into the first slurry is, for instance, 36 hours or less.

In the fixing step of the exemplary embodiment, it is preferable that the feed rate of exhaust gas into the first slurry is 1 L/min or more per 1 kg of the solid content (on the absolute dry basis) in the cement-containing waste, and the feed time of the exhaust gas into the first slurry is 2 hours or more.

In the fixing step, it is preferable to control the exhaust gas to be supplied into the first slurry until the pH of the first slurry reaches a range from 6 to 9, and it is more preferable to control the exhaust gas to be supplied into the first slurry until the pH of the first slurry reaches a range from 6 to 8.

The pH of the first slurry can be controlled by adjusting, for instance, the feed rate and feed time of the exhaust gas, the temperature of the first slurry, and the like.

In an exemplary embodiment of the fixing step, it is preferable to supply the exhaust gas into the first slurry until the pH of the first slurry becomes constant.

The pH being constant refers to when a value of a variation (difference) in pH, expressed as ΔpH, satisfies ΔpH ≤ 0.5 for at least 120 minutes.

In an exemplary embodiment of the fixing step, it is preferable to continue to supply the exhaust gas into the first slurry even after the pH of the first slurry becomes constant.

In the fixing step, the exhaust gas is preferably supplied into the first slurry by bubbling.

In the fixing step, the exhaust gas is preferably combustion exhaust gas.

Examples of the combustion exhaust gas include combustion exhaust gas formed from the combustion of liquid fuels (e.g., heavy oil, kerosene, and light oil), gases (e.g., liquefied petroleum gas, liquefied natural gas, and solid fuel gasification gas), and solids (e.g., coal, biomass, and garbage).

### Second Slurry Formation Step

A second slurry is formed in the fixing step.

The second slurry containing calcium carbonate is obtained through a second slurry formation step.

Examples of materials other than calcium carbonate contained in the second slurry include fine aggregate, coarse aggregate, and crushed stone.

### Separation Step

The manufacturing method of the exemplary embodiment preferably further includes a step of separating the second slurry into a solid content containing calcium carbonate and a liquid.

A separation method is not particularly limited, but examples thereof include filtration, centrifugation, and decantation.

### Drying Step

The manufacturing method of the exemplary embodiment preferably further includes a step of drying the separated solid content.

A drying method is not particularly limited, and any known drying apparatus is usable.

The solid content includes calcium carbonate, water, aggregates, and the like.

The content ratio of calcium carbonate in the solid content (after drying) is preferably 20 mass% or more, more preferably 30 mass% or more, and still more preferably 40 mass% or more.

### Usage of Recycled Material from Cement

The recycled material from cement obtained by the manufacturing method of the first exemplary embodiment is usable for any of the following applications: concrete products, road materials, embankment materials, blocks, mine drainage neutralizers, disinfectants for the livestock industry, fillers for additives to plastics, fillers for additives to rubber, and fillers for additives to paints.

Use of the recycled material from cement of the exemplary embodiment in construction and civil engineering materials (e.g., concrete products, road materials, and embankment materials) makes it possible to reduce the release of carbon dioxide back into the atmosphere.

Use of the recycled material from cement of the exemplary embodiment as a substitute for natural limestone makes it possible to reduce the amount of carbon dioxide emitted during mining of natural limestone, production of cement using natural limestone, and production of synthetic calcium carbonate.

### Modification of Embodiment(s)

The invention is by no means limited to the above exemplary embodiment. The invention may include modifications and improvements that fall within the scope of achieving the object of the invention.

### Examples

Examples of the invention will be described below. The invention is by no means limited to these Examples.

In Examples and Comparative below, recycled materials from cement were manufactured using experimental equipment.

### Example 1

The first slurry was formed by mixing 45 g of ordinary Portland cement with 450 g of water (first slurry formation step).

Next, the first slurry was stirred with a stirrer at 20 degrees C for three hours (stirring step). A rotation speed of the stirrer was set to 800 rpm.

Next, the first slurry was transferred to a separable flask (500 mL), and while stirring the first slurry with the stirrer (rotation speed of 800 rpm), carbon dioxide was supplied into the first slurry at a flow rate of 500 mL/min to cause bubbling. The bubbling of carbon dioxide was carried out using kerami filter (cylindrical gas injection tube). During the bubbling, the pH of the first slurry was monitored, and the flow rate of carbon dioxide at each of inlet and outlet of the separable flask was monitored, and carbon dioxide was fixed as calcium carbonate (fixing step). During the bubbling of carbon dioxide, the pH of the first slurry decreased from 13 to 6.4 and remained almost constant until the bubbling was stopped.

After obtaining the slurry formed in the fixing step (second slurry formation step), the slurry was immediately filtered to be separated into a solid content and a liquid (separation step), and the solid content was dried (drying step).

The recycled material from cement (solid content after drying) of Example 1 was thus obtained.

### Examples 2 to 4

Recycled materials from cement of Examples 2 to 4 were manufactured in the same manner as in Example 1, except that the stirring time of the first slurry in the stirring step was changed to those shown in Table 1.

### Comparative 1

A recycled material from cement of Comparative 1 was manufactured in the same manner as in Example 1, except that the first slurry was not stirred in the stirring step.

### Comparative 2

A recycled material from cement of Comparative 2 was manufactured in the same manner as in Example 1, except that the stirring time of the first slurry in the stirring step was changed to the stirring time shown in Table 1.

### Example 5

A recycled material from cement of Example 5 was manufactured in the same manner as in Example 1, except that the stirring time of the first slurry in the stirring step and the bubbling time and bubbling rate of carbon dioxide in the fixing step were changed to the stirring time, bubbling time and bubbling rate shown in Table 1.

In the bubbling of carbon dioxide in Example 5, the pH of the first slurry became constant 40 minutes after the start of the bubbling, but the bubbling was continued for another 80 minutes. Accordingly, the bubbling was carried out for a total of 120 minutes.

### Comparative 3

A recycled material from cement of Comparative 3 was manufactured in the same manner as in Example 5, except that the first slurry was not stirred in the stirring step.

### Example 6

A recycled material from cement of Example 6 was manufactured in the same manner as in Example 5, except that the stirring time of the first slurry in the stirring step was changed to the stirring time shown in Table 1.

In the bubbling of carbon dioxide in Example 6, the pH of the first slurry became constant 40 minutes after the start of the bubbling, but the bubbling was continued for another 320 minutes. Accordingly, the bubbling was carried out for a total of 360 minutes.

### Examples 7 and 8

Recycled materials from cement of Examples 7 and 8 were manufactured in the same manner as in Example 1, except that the material, the stirring time of the first slurry in the stirring step, and the bubbling time of carbon dioxide in the fixing step in Example 1 were changed to the material, stirring time, and bubbling time shown in Table 1.

In Examples 7 and 8, concrete sludge discharged from a cement product manufacturing plant was used as the material.

The ratio (weight ratio) of the solid content to water in the concrete sludge was adjusted to be the same as that of ordinary Portland cement. The cement component of the solid content in the concrete sludge was approximately 88 mass% as a result of elemental analysis, and the rest was presumed to be aggregate.

Elemental analysis values were measured by X-ray fluorescence analysis.

### Comparative 4

A recycled material from cement of Comparative 4 was manufactured in the same manner as in Example 7, except that the first slurry was not stirred in the stirring step.

### Evaluation

### Content Ratio of Calcium Carbonate

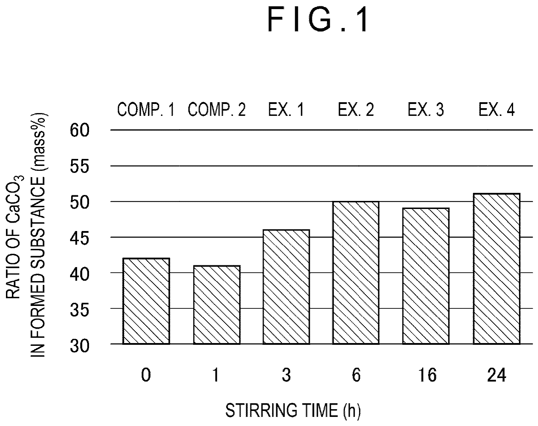

A content ratio of calcium carbonate (mass%) in the recycled material from cement manufactured in each Example was measured by thermogravimetric analysis under the following measurement conditions. Table 1 and Figs. 1 to 4 show evaluation results.

### Measurement conditions:

Apparatus: Thermogravimetric analyzer (manufactured by Shimadzu Corporation, model: TGA-50)
Heating temperature: Room temperature (25 degrees C) to 900°C
Heating rate: 15 degrees C/min
Measurement sample: 10 mg

**Table 1**

| | Material | Stirring Step | Fixing Step | | Evaluation Results | |
|---|---|---|---|---|---|---|
| | | Stirring Duration | Bubbing of Carbon Dioxide | | Calcium Carbonate Ratio | Fig. No. |
| | | | Duration | Rate | | |
| Ex. 1 | Ordinary Portland Cement | 3 hr. | 50 min. | 500 mL/min. | 46 mass% | Fig. 1 |
| Ex. 2 | Ordinary Portland Cement | 6 hr. | 50 min. | 500 mL/min. | 50 mass% | Fig. 1 |
| Ex. 3 | Ordinary Portland Cement | 16 hr. | 50 min. | 500 mL/min. | 49 mass% | Fig. 1 |
| Ex. 4 | Ordinary Portland Cement | 24 hr. | 50 min. | 500 mL/min. | 51 mass% | Fig. 1 |
| Comp. 1 | Ordinary Portland Cement | 0 hr. | 50 min. | 500 mL/min. | 42 mass% | Fig. 1 |
| Comp. 2 | Ordinary Portland Cement | 1 hr. | 50 min. | 500 mL/min. | 41 mass% | Fig. 1 |
| Ex. 5 | Ordinary Portland Cement | 16 hr. | 120 min. | 220 mL/min. | 56 mass% | Figs. 2, 3 |
| Comp. 3 | Ordinary Portland Cement | 0 hr. | 120 min. | 220 mL/min. | 49 mass% | Fig. 2 |
| Ex. 6 | Ordinary Portland Cement | 16 hr. | 360 min. | 220 mL/min. | 60 mass% | Fig. 3 |
| Ex. 7 | Concrete Sludge | 6 hr. | 120 min. | 500 mL/min. | 48 mass% | Fig. 4 |
| Ex. 8 | Concrete Sludge | 16 hr. | 120 min. | 500 mL/min. | 53 mass% | Fig. 4 |
| Comp. 4 | Concrete Sludge | 0 hr. | 120 min. | 500 mL/min. | 40 mass% | Fig. 4 |

Examples 1 to 4 are compared with Comparatives 1 and 2 (Fig. 1).

In Examples 1 to 4 in which the first slurry was stirred for 2 hours or more, the amount of calcium carbonate formed in the recycled material from cement was larger than that in Comparative 1 in which the first slurry was not stirred and that in Comparative 2 in which the first slurry was stirred for one hour.

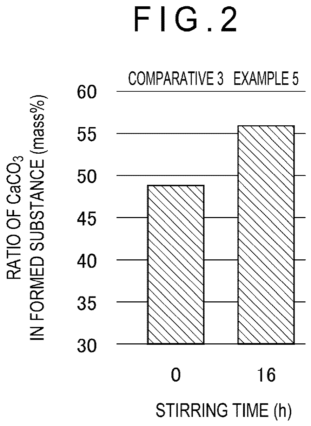

Example 5 and Comparative 3, in which the bubbling speed was slower and the time of the bubbling was longer than those in the test conditions in Example 3 and Comparative 1, are compared with each other (Fig. 2).

Similar to the results shown in Fig. 1, Example 5, in which the first slurry was stirred for 2 hours or more, showed a larger amount of calcium carbonate formed in the recycled material from cement than Comparative 3, in which the first slurry was not stirred.

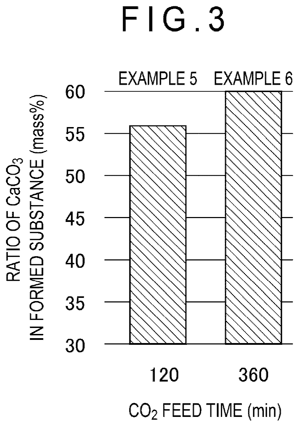

Example 5 and Example 6, in which the bubbling speed was slower and the time of the bubbling was longer than those in the test conditions in Example 3, are compared with each other (Fig. 3).

It has been found that, in the bubbling of carbon dioxide, continuing the bubbling even after the pH of the first slurry became constant to extend the time of the bubbling increased the amount of calcium carbonate formed in the recycled material from cement.

In the case of Example 6, the ratio of calcium carbonate in the recycled material from cement was 60 mass%. This means that a mass of carbon dioxide in the cement was fixed at 36, assuming that the original cement mass was 100. The cement contains about 46 mass% of calcium, of which the amount of calcium that contributed to the formation of calcium carbonate was calculated to be about 72 mass%, which has been found very large.

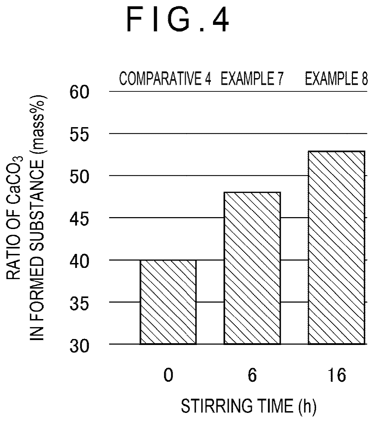

Example 7, Example 8, and Comparative 4, in which concrete sludge was used as the material and the bubbling time was longer than those in the test conditions in Example 2, Example 3, and Comparative 1, were compared with each other (Fig. 4).

Similar to the results shown in Fig. 1, Examples 7 and 8, in which the first slurry was stirred for 2 hours or more, showed a larger amount of calcium carbonate formed in the recycled material from cement than Comparative 4, in which the first slurry was not stirred.

The above results reveal that stirring the first slurry for at least 2 hours before bubbling of carbon dioxide is effective in increasing the amount of calcium carbonate formed in recycled material from cement.

### INDUSTRIAL APPLICABILITY

According to the method for manufacturing a recycled material from cement of the invention, the recycled material from cement manufactured is usable in concrete products, road materials, civil engineering and construction materials, and the like. Therefore, the method for manufacturing a recycled material from cement of the invention has industrial applicability.

## Claims

1. A method for manufacturing a recycled material from cement, the method comprising:
forming a first slurry by mixing cement-containing waste with water;
stirring the first slurry for a stirring time of 2 hours or more;
supplying exhaust gas containing carbon dioxide into the first slurry while stirring the first slurry to fix the carbon dioxide contained in the exhaust gas as calcium carbonate; and
forming a second slurry in the fixing of the carbon dioxide, the second slurry containing the calcium carbonate.

2. The method for manufacturing a recycled material from cement according to claim 1, further comprising: separating the second slurry into a solid content containing the calcium carbonate and a liquid.

3. The method for manufacturing a recycled material from cement according to claim 2, further comprising: drying the separated solid content.

4. The method for manufacturing a recycled material from cement according to any one of claims 1 to 3, wherein the stirring time of the first slurry is 5 hours or more.

5. The method for manufacturing a recycled material from cement according to any one of claims 1 to 4, wherein in the fixing of the carbon dioxide, a feed rate of the exhaust gas into the first slurry is 1 L/min or more per 1 kg of a solid content, on an absolute dry basis, in the cement-containing waste, and a feed time of the exhaust gas into the first slurry is 2 hours or more.

6. The method for manufacturing a recycled material from cement according to any one of claims 1 to 5, wherein in the fixing of the carbon dioxide, the exhaust gas is supplied into the first slurry by bubbling.

7. The method for manufacturing a recycled material from cement according to any one of claims 1 to 6, wherein in the forming of the first slurry, a mass ratio of a solid content, on an absolute dry basis, in the cement-containing waste to the water, expressed as the solid content on the absolute dry basis in the cement-containing waste/the water, is in a range from 0.01 to 0.43.

8. The method for manufacturing a recycled material from cement according to any one of claims 1 to 7, wherein the exhaust gas is combustion exhaust gas.

9. The method for manufacturing a recycled material from cement according to any one of claims 1 to 8, wherein the recycled material from cement is used for any one of applications including concrete products, road materials, embankment materials, blocks, mine drainage neutralizers, disinfectants for livestock industry, fillers for additives to plastics, fillers for additives to rubber, and fillers for additives to paints.
